# EUROPÄISCHE PATENTSCHRIFT

(11) **EP 1 779 304 B1**
(45) Veröffentlichungstag und Bekanntmachung des Hinweises auf die Patenterteilung: **03.07.2013**
(21) Anmeldenummer: 05781701.7
(22) Anmeldetag: 11.08.2005
(51) Int. Cl.: G06K 19/077

(54) **VERFAHREN ZUR HERSTELLUNG EINES TRAGBAREN DATENTRÄGERS**
METHOD FOR THE PRODUCTION OF A PORTABLE DATA CARRIER
PROCEDE DE PRODUCTION D'UN SUPPORT DE DONNEES PORTATIF

(30) Priorität: 12.08.2004 DE 102004039201
(43) Veröffentlichungstag der Anmeldung: 02.05.2007
(73) Patentinhaber: Giesecke & Devrient GmbH, 81677 München (DE)
(72) Erfinder: LINKE, Andreas, 83623 Dietramszell (DE); TARANTINO, Thomas, 83410 Laufen (DE); WELLING, Ando, 84424 Isen (DE); ANGERER, Johann, 83707 Bad Wiessee (DE); VOGEL, Kolja, 81541 München (DE)
(86) Internationale Anmeldenummer: PCT/EP2005/008756
(87) Internationale Veröffentlichungsnummer: WO 2006/018230

(56) Entgegenhaltungen:
- EP-A- 1 429 283
- WO-A-03/027946
- DE-A1- 10 233 428
- US-B1- 6 554 193
- US-B1- 6 694 399

## Beschreibung

Die Erfindung betrifft ein Verfahren zur Herstellung eines tragbaren Datenträgers. Weiterhin betrifft die Erfindung ein Halbzeug zur Herstellung eines tragbaren Datenträgers und einen tragbaren Datenträger.

Bei vielen Anwendungen von tragbaren Datenträgern führen diese eine Kommunikation mit einem elektrischen Gerät durch. Angesichts der starken Verbreitung von elektrischen Geräten, die über eine USB-Schnittstelle verfügen, nimmt auch die Zahl der tragbaren Datenträger mit USB-Schnittstelle zu. USB steht für Universal Serial Bus und bezeichnet einen Kommunikationsstandard, mit dem sich vergleichsweise hohe Datenübertragungsraten erzielen lassen. Zur Herstellung einer Datenverbindung zwischen dem tragbaren Datenträger und dem elektrischen Gerät wird der tragbare Datenträger in eine USB-Buchse des elektrischen Geräts eingesteckt. Um dies zu ermöglichen ist der tragbare Datenträger bereichsweise als ein USB-Stecker ausgebildet, dessen Geometrie und Kontaktbelegung auf die USB-Buchse abgestimmt ist. Ein derart ausgebildeter tragbarer Datenträger wird üblicherweise auch als USB-Token bezeichnet und kann beispielsweise als Speicherelement oder als Sicherheitswerkzeug eingesetzt werden.

USB-Token werden in der Regel mittels Platinen hergestellt, die an einer Seite USB-Kontakte tragen und auf der anderen Seite einen Speicherchip aufweisen. Diese Art der Fertigung ist allerdings relativ aufwendig.

Eine alternative Fertigungsmethode ist aus der WO 03/027946 A1 bekannt. Dort ist ein Verfahren zur Herstellung eines elektronischen Schlüssels offenbart, der ein Modul mit einem integrierten Schaltkreis aufweist. Der integrierte Schaltkreis ist mit Kontaktflächen des Moduls verbunden, die so ausgebildet sind, daß sie direkt von einer USB-Buchse kontaktiert werden können. Das Modul wird in Chipkartentechnologie hergestellt. Um mit einer USB-Buchse kompatible Außenabmessungen zu erreichen, wird das Modul vollflächig oder in Teilbereichen mit zusätzlichem Material versehen oder in einen Adapter eingeführt. In einer weiteren Variante wird ein Träger in Gestalt einer rechteckigen Hülse vorgeschlagen, in die das in Chipkartentechnologie hergestellte Modul, wie in eine Garage, eingeschoben wird. Diese bekannten Verfahren erfordern entweder zusätzliche Arbeitsschritte an in der Chipkartenfertigung standardmäßig nicht vorhandenen Anlagen oder die Bereitstellung von anspruchsvollen Formteilen.

Aus der EP 1 429 283 A2 ist ferner ein in Chipkartentechnologie hergestellten Datenträger bekannt, der vorübergehend mit einer deckungsgleichen Füllkarte verbunden werden kann, um eine Struktur mit gegenüber der Chipkartennormdicke erhöhter Stärke zu schaffen, die es insbesondere erlaubt, einen Kontaktanschluß mit USB-kompatiblen Abmessungen zu realisieren. Die Handhabung einer separaten Füllkarte ist unbefriedigend.

Der Erfindung liegt die Aufgabe zugrunde, einen tragbaren Datenträger anzugeben, der direkt von einem gemäß dem USB-Standard ausgebildeten Kontaktierelement kontaktiert werden kann und dabei so einfach herstellbar ist, daß er gegebenenfalls von einem Nutzer endmontiert werden kann.

Diese Aufgabe wird durch ein Herstellungsverfahren mit der Merkmalskombination des Anspruchs 1 gelöst.

Beim erfindungsgemäßen Verfahren zur Herstellung eines tragbaren Datenträgers, der einen integrierten Schaltkreis und ein galvanisch mit dem integrierten Schaltkreis verbundenes Kontaktfeld aufweist, wird der tragbare Datenträger im Bereich des Kontaktfeldes so geformt und das Kontaktfeld wird so ausgeführt, daß eine direkte Kontaktierung des Kontaktfeldes durch ein gemäß dem USB-Standard ausgebildetes Kontaktierelement möglich ist. Es wird ein Element des tragbaren Datenträgers in Chipkartentechnologie gefertigt, das den integrierten Schaltkreis und das Kontaktfeld aufweist und es werden für den Betrieb des tragbaren Datenträgers benötigte Daten und/ oder benötigter Programmcode in den integrierten Schaltkreis geladen. Dann wird das Element dauerhaft mit einem Träger verbunden.

Das erfindungsgemäße Verfahren hat den Vorteil, daß die Fertigung wenigstens zum Teil mit Fertigungsanlagen für Chipkarten durchgeführt werden kann. Derartige Anlagen sind vielfältig verfügbar und zeichnen sich durch einen hohen Automatisierungsgrad aus. Insbesondere ist es mit diesen Anlagen auch möglich, Daten und/oder Programmcode sehr effizient in den integrierten Schaltkreis zu laden.

Bei einem ersten Ausführungsbeispiel wird das Element als ein Chipkartenelement ausgebildet, das einen flachstückartigen Kartenkörper aufweist. Der Kartenkörper wird dünner als der tragbare Datenträger, insbesondere mit einer durch die Norm ISO 7810 vorgegebenen Dicke, ausgebildet. In den Kartenkörper kann ein Chipmodul eingebettet werden, das den integrierten Schaltkreis und das Kontaktfeld aufweist. Das Chipkartenelement kann vor der Ausbildung der Verbindung mit dem Träger wenigstens zeitweise in eine Karte mit einer größeren Hauptfläche als das Chipkartenelement, insbesondere mit einer Hauptfläche gemäß der Norm ISO 7810, eingebunden sein. Dies hat den Vorteil, daß die Handhabung des Chipkartenelements während der Fertigung erleichtert wird und bestehende Chipkarten-Fertigungsanlagen nur geringfügig modifiziert werden müssen.

Das Laden der Daten und/ oder des Programmcodes in den integrierten Schaltkreis wird vorzugsweise mit Hilfe des USB-Protokolls durchgeführt, das ohnehin für die Kommunikation des tragbaren Datenträgers vorgesehen ist. Um das Laden möglichst einfach zu gestalten, wird der integrierte vorteilhaft frühzeitig, zweckmäßig unmittelbar zu Beginn der Komplettierung, dazu eingerichtet, das USB-Protokoll abzuwickeln.

Der Träger kann eine größere Hauptfläche als das Element aufweisen und ist insbesondere als ein Spritzgußteil ausgebildet, das sich kostengünstig in einer großen Formenvielfalt herstellen lässt.

Das Element wird bevorzugt in einem partiell umrahmten Bereich des Trägers angeordnet. Dadurch wird eine präzise Positionierung erleichtert und das Element in seiner gewünschten Position am Träger stabilisiert. Element und Träger sind zweckmäßig so geformt, daß sie nur in einer einzigen definiteren Weise zusammengefügt werden können. Zur Herstellung einer dauerhaften Verbindung wird das Element formschlüssig und/oder kraftschlüssig mit dem Träger verbunden. In diesem Fall können Element und Träger vom Benutzer des tragbaren Datenträgers manuell zusammengefügt werden. Wenn die Endmontage beim Benutzer stattfindet, können auch die Vorbereitungen für den Versand mit Hilfe von Anlagen der Chipkartenfertigung durchgeführt werden.

Ein Halbzeug kann zur Herstellung eines tragbaren Datenträgers verwendet werden, der ein derart ausgeführtes Kontaktfeld aufweist und im Bereich des Kontaktfeldes so geformt ist, daß eine direkte Kontaktierung des Kontaktfeldes durch ein gemäß dem USB-Standard ausgebildetes Kontaktierelement möglich ist. Das erfindungsgemäße Halbzeug weist einen integrierten Schaltkreis und das Kontaktfeld auf, das galvanisch mit dem integrierten Schaltkreis verbunden ist und ist als ein in Chipkartentechnologie gefertigtes Element ausgebildet. Vorteil des Halbzeugs ist, daß in dem integrierten Schaltkreis zusätzlich zu dem bei seiner Herstellung erzeugten Speicherinhalt für den Betrieb des tragbaren Datenträgers benötigte Daten und/ oder benötigter Programmcode gespeichert sind.

Der erfindungsgemäße tragbare Datenträger weist einen integrierten Schaltkreis und ein galvanisch mit dem integrierten Schaltkreis verbundenes Kontaktfeld auf. Im Bereich des Kontaktfeldes sind der Datenträger so geformt und das Kontaktfeld so ausgeführt, daß eine direkte Kontaktierung des Kontaktfeldes durch ein gemäß dem USB-Standard ausgebildetes Kontaktierelement möglich ist. Vorteil des erfindungsgemäßen tragbaren Datenträgers ist, daß er ein in Chipkartentechnologie gefertigtes Element mit dem integrierten Schaltkreis und dem Kontaktfeld aufweist, das in einem wenigstens partiell umrahmten Bereich auf einer Hautfläche eines Trägers angeordnet und dauerhaft mit dem Träger verbunden ist.

Die Erfindung wird nachstehend anhand der in der Zeichnung dargestellten Ausführungsbeispiele erläutert.

Es zeigen:
- Fig.1: ein erstes Ausführungsbeispiel für einen erfindungsgemäß ausgebildeten tragbaren Datenträger in einer schematisierten Aufsicht,
- Fig. 2: einen Schnitt durch das in Fig. 1 dargestellte Ausführungsbeispiel des tragbaren Datenträgers entlang der in Fig. 1 eingezeichneten Schnittlinie AA,
- Fig. 3: einen Schnitt durch das in Fig. 1 dargestellte Ausführungsbeispiel des tragbaren Datenträgers entlang der in Fig. 1 eingezeichneten Schnittlinie BB,
- Fig. 4: eine Momentaufnahme während der Herstellung des ersten Ausführungsbeispiels des tragbaren Datenträgers in Form einer schematisierten Schnittdarstellung,
- Fig. 5: ein Ausführungsbeispiel für das Chipkartenelement vor der Verbindung mit dem Träger in einer schematisierten Aufsicht,
- Fig. 6: ein nicht erfindungsgemäßes Ausführungsbeispiel für den tragbaren Datenträger in einer schematisierten Aufsicht,
- Fig. 7: eine Momentaufnahme während der Herstellung des nicht erfindungsgemäßen Ausführungsbeispiels des tragbaren Datenträgers in einer Fig. 4 entsprechenden Darstellung und
- Fig. 8: eine Momentaufnahme während der Herstellung eines weiteren nicht erfindungsgemäßen Ausführungsbeispiels des tragbaren Datenträgers in einer Fig. 4 entsprechenden Darstellung.

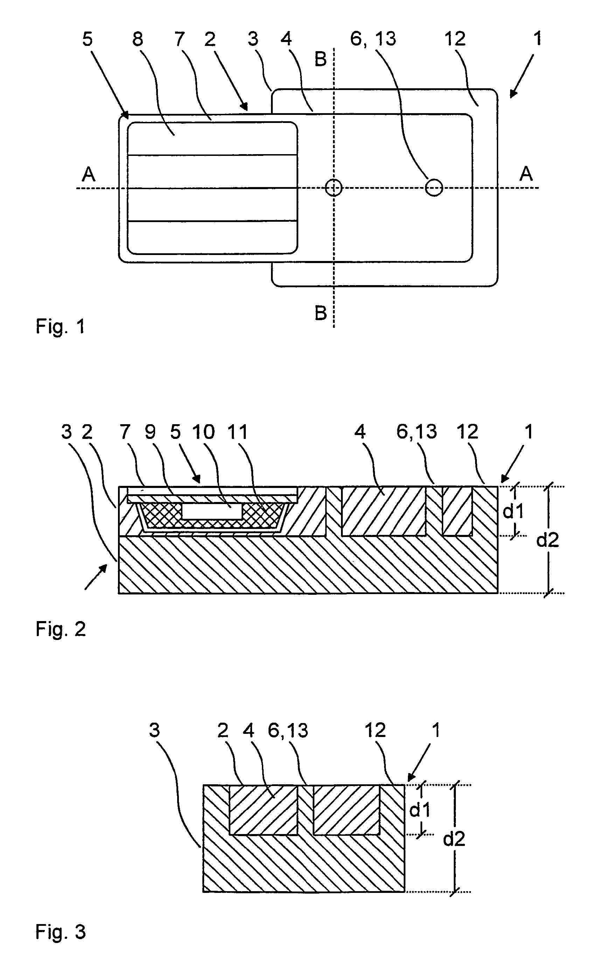

Fig.1 zeigt ein erstes Ausführungsbeispiel für einen erfindungsgemäß ausgebildeten tragbaren Datenträger 1 in einer schematisierten Aufsicht. Ein Schnitt durch den tragbaren Datenträger 1 entlang der in Fig.1 eingezeichneten Schnittlinie AA ist in Fig. 2 dargestellt. Einen weiteren Schnitt entlang der Schnittlinie BB zeigt Fig. 3. Aus Gründen der Anschaulichkeit sind die Schnitte stark unmaßstäblich dargestellt.

Der tragbare Datenträger 1 ist als USB -Token ausgebildet, das beispielsweise in eine USB-Buchse eines Computers oder eines sonstigen Geräts eingesteckt werden kann. Eine Datenübertragung gemäß dem USB-Standard ermöglicht deutlich höhere Übertragungsraten als beispielsweise die sequentielle Datenübertragung einer Chipkarte gemäß dem T = 0 oder dem T=1 Protokoll.

Der tragbare Datenträger 1 weist ein Chipkartenelement 2 und einen Träger 3 auf. Das Chipkartenelement 2 besteht aus einem Kartenkörper 4 und einem Chipmodul 5, das in den Kartenkörper 4 eingebettet ist. Der Kartenkörper 4 ist beispielsweise als Spritzgußteil oder laminierter Folienstapel ausgebildet und außerhalb des Bereichs, in dem das Chipmodul 5 angeordnet ist, mit zwei Durchgangsbohrungen 6 versehen. Das Chipmodul 5 weist ein Kontaktfeld 7 mit vier Kontaktflächen 8 auf, die auf einem Substrat 9 angeordnet sind. Die Ausbildung des Kontaktfeldes 7 ist mit dem USB-Standard kompatibel. Bis auf die Ausbildung des Kontaktfeldes 7 weist das im Rahmen der Erfindung eingesetzte Chipmodul 5 eine für den Einbau in Chipkarten übliche Bauart auf. Auf der dem Kontaktfeld 7 gegenüberliegenden Seite des Substrats 9 ist ein integrierter Schaltkreis 10 angeordnet und durch einen Vergußblock 11 vor äußeren Einwirkungen geschützt. Der integrierte Schaltkreis 10 ist nicht geschnitten dargestellt und mittels nicht figürlich dargestellter elektrischer Verbindungen am Kontaktfeld 7 angeschlossen.

Der Träger 3 ist teils deckungsgleich zum Chipkartenelement 2 ausgebildet und steht teils seitlich über das Chipkartenelement 2 über. In den überstehenden Bereichen weist der Träger 3 einen erhöhten Rand 12 auf, der das Chipkartenelement 2 an drei Seiten umgibt und bündig mit der Oberfläche des Chipkartenelements 2 abschließt. Auf seiner dem Chipkartenelement 2 zugewandten Hauptfläche weist der Träger 3 zwei senkrecht zu seiner Oberfläche orientierte Zapfen 13 auf, welche in die Durchgangsbohrungen 6 des Chipkartenelements 2 eingreifen und dadurch, unterstützt vom Rand 12 des Trägers 3, eine feste und dauerhafte mechanische Verbindung zwischen dem Chipkartenelement 2 und dem Träger 3 ausbilden. Um ein Ablösen des Chipkartenelements 2 vom Träger 3 zu verhindern, werden die Zapfen 13 mit einer radialen Überdeckung in die Durchgangsbohrungen 6 gepreßt. Alternativ zu den Durchgangsbohrungen 6 und den Zapfen 13 können auch Hinterschnitte auf der Innenseite des Rands 12 des Trägers 3 und auf den korrespondierenden Stirnflächen des Chipkartenelements 2 vorgesehenen sein, durch die ein formschlüssiger Eingriff zwischen dem Chipkartenelement 2 und dem Träger 3 hergestellt wird. Die Hinterschnitte können beispielsweise durch eine konische Ausführung der genannten Flächen ausgebildet werden. In einer alternativen Ausführung der Zapfenlösung besteht der Träger 3 aus mehreren Teilschichten, die ineinandergreifende Zapfen 13 bilden, welche durch das Zusammendrücken beim Verbinden mit dem Chipkartenelement 2 fest in die Durchgangsbohrungen 6 eingepreßt werden.

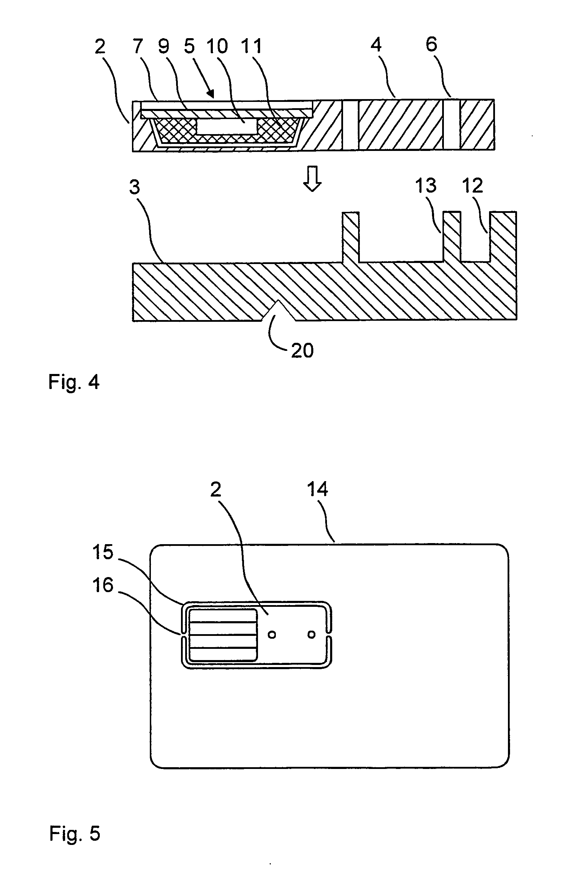

Das Chipkartenelement 2 weist eine gleichförmige Dicke d1 auf, die in Anlehnung an die Norm ISO 7810 für Chipkarten 0,8 mm beträgt. Im Bereich seines Randes 12 weist der Träger 3 eine Dicke auf, die der Dicke d2 des tragbaren Datenträgers 1 entspricht. Im Hinblick auf eine Kompatibilität mit dem USB-Standard wird für die Dicke d2 ein Wert von 2,2 mm gewählt. Beim dargestellten Ausführungsbeispiel ist der tragbare Datenträger 1 bezüglich der Dicke d2 gleichförmig ausgebildet, d. h. er weist vollflächig den gleichen Wert für die Dicke d2 auf. Insbesondere an der Unterseite können dabei, wie in Fig. 4 durch die Vertiefung 20 angedeutet, angepaßt an jeweilige Schnittstellendefintionen Vertiefungen oder Vorsprünge vorgesehen sein, die die Verbindung des Datenträgers 1 mit einer Gegenschnittstelle, z.B. einer USB-Schnittstelle, unterstützen.

Die Herstellung des ersten Ausführungsbeispiels des tragbaren Datenträgers 1 wird anhand der Fig. 4 und 5 erläutert.

Fig. 4 zeigt eine Momentaufnahme während der Herstellung des ersten Ausführungsbeispiels des tragbaren Datenträgers 1 in Form einer schematisierten Schnittdarstellung. Dargestellt sind das Chipkartenelement 2 und der Träger 3 kurz vor dem Zusammenfügen zum tragbaren Datenträger 1. Zur Herstellung des tragbaren Datenträgers 1 werden zunächst das Chipkartenelement 2 und der Träger 3 für sich gefertigt und dann in der in Fig. 4 dargestellten Weise zusammengeführt. Der Träger 3 ist vorzugsweise als Spritzgußteil gefertigt. Die Herstellung des Chipkartenelements 2 wird anhand von Fig. 5 erläutert.

Das Chipkartenelement 2 und der Träger 3 werden einander so angenähert, daß das Chipkartenelement 2 innerhalb des Rands 12 des Trägers 3 angeordnet wird und die Durchgangsbohrungen 6 des Chipkartenelements 2 mit den Zapfen 13 des Trägers 3 zur Deckung kommen. Die Annäherung wird nach dem Eintauchen der Zapfen 13 in die Durchgangsbohrungen 6 fortgesetzt, bis sich das Chipkartenelement 2 und der Träger 3 vollflächig berühren. Chipkartenelement 2 und Träger 3 sind dabei zweckmäßig so geformt, daß nur eine einzige Zusammenfügungslage möglich ist. Zur Ausbildung eines festen Verbunds zwischen Chipkartenelement 2 und Träger 3 kann zusätzlich zu der Verzapfung beispielsweise eine Verklebung oder Verschweißung durchgeführt werden. In allen Varianten kann die Verbindung zwischen Chipkartenelement 2 und Träger 3 vollautomatisch maschinell durchgeführt werden. Alternativ besteht, zumindest bei den rein mechanischen Verbindungsarten, ferner die Möglichkeit, die Verbindung vom Benutzer des tragbaren Datenträgers 1 vor der erstmaligen Benutzung durchführen zu lassen.

Wie im folgenden näher erläutert wird, wird die Freiheit hinsichtlich der Art des Zusammenfügens dadurch ermöglich, daß nicht erst der fertiggestellte tragbare Datenträger 1 mit Programmcode und Daten geladen wird, die für dessen Nutzung benötigt werden. Vielmehr wird dieser Ladevorgang ganz oder teilweise mit dem Chipkartenelement 2 durchgeführt, bevor dieses mit dem Träger 3 verbunden wird.

Fig. 5 zeigt ein Ausführungsbeispiel für das Chipkartenelement 2 vor der Verbindung mit dem Träger 3 in einer schematisierten Aufsicht. Das Chipkartenelement 2 ist als ein Bestandteil einer Normkarte 14 ausgebildet, deren Formgebung der Norm ISO 7810 entspricht. Dadurch ist es möglich, das Chipkartenelement 2 mit einer bestehenden Fertigungsanlage für Normkarten 14 herzustellen, die hierzu nur geringfügig angepaßt werden muß. Um das Chipkartenelement 2 nach der Herstellung leicht aus der Normkarte 14 entnehmen zu können, wird das Chipkartenelement 2 im Bereich seiner Außenkontur durch Stanzungen 15 von der Normkarte 14 getrennt, wobei lediglich schmale Stege 16 zwischen dem Chipkartenelement 2 und der Normkarte 14 erhalten bleiben, um ein Herausfallen des Chipkartenelements 2 zu verhindern. Die Stege 16 können zum Entnehmen des Chipkartenelements 2 maschinell durchtrennt werden, anschließend kann das Chipkartenelement 2 maschinell mit dem Träger 3 verbunden werden. Ebenso ist es möglich, die Normkarte 14 mit dem Chipkartenelement 2 an den vorgesehenen Benutzer zu versenden, der das Chipkartenelement 2 dann manuell aus der Normkarte 14 heraus bricht und auf den Träger 3 steckt.

In beiden Fällen ist der im Chipkartenelement 2 enthaltene integrierte Schaltkreis 10 beim Entnehmen des Chipkartenelements 2 aus der Normkarte 14 bereits mit den für den Betrieb des tragbaren Datenträgers 1 erforderlichen Daten und Programmcodes geladen. Das Laden des integrierten Schaltkreises 10 erfolgt zweckmäßig zu einem Zeitpunkt, zu dem das Chipkartenelement 2 noch ein Bestandteil der Normkarte 14 und somit gut handhabbar ist. Im einzelnen werden dabei eine elektrische Prüfung des Chipmoduls 5, die Komplettierung des Betriebssystems, eine Initialisierung und ggf. eine Personalisierung durchgeführt.

Möglichst frühzeitig, zum Beispiel unmittelbar zu Beginn der Komplettierung, wird in dem Schaltkreis 10 die USB-Funktionalität angelegt, so daß die weitere Komplettierung und ggf. die Personalisierung unter Verwendung des USB-Protokolles erfolgen können. Dies hat den Vorteil, daß dann, im Vergleich zur Verwendung des ISO 7816-Protokoll, größere Datenmengen übertragen werden können und der Ladevorgang entsprechend schneller ausführbar ist. Zudem erlaubt das USB-Protokoll längere Leitungswege, so daß der Ladevorgang direkt zwischen dem Chipkartenelement 2 und einem zur Komplettierung eingesetzten Rechner erfolgen kann.

Beherrscht das Betriebssystem des integrierten Schaltkreises 10 das USB-Protokoll und beherrscht auch die beim Rechner eingesetzte Komplettierungssoftware das USB-Protokoll ,d.h. sind entsprechende Treiber vorhanden, wird zur Durchführung des Ladevorganges das gemäß USB-Standard ausgebildete Kontaktfeld 7 des Chipkartenelements 2 mit einem darauf abgestimmten Kontaktkopf kontaktiert und anschließend eine Datenübertragung zwischen dem eingesetzten Rechner und dem integrierten Schaltkreis 10 des Chipkartenelements 2 gemäß dem USB-Protokoll ausgeführt.

Für die Datenübertragung besteht in einer ersten Variante die Möglichkeit, einen passiven Kontaktkopf einzusetzen und die USB-Datenübertragung unmittelbar zwischen dem Rechner und dem integrierten Schaltkreis 10 des Chipkartenelements 2 durchzuführen. Allerdings ist bei jeder erneuten Kontaktierung eines Chipkartenelements 2 durch den Kontaktkopf der Overhead des USB-Protokolls erneut abzuarbeiten, so daß pro Chipkartenelement 2 relativ viel Zeit für die vollständige Übertragung der Daten und des Programmcodes vom Rechner zum integrierten Schaltkreis 10 benötigt wird.

In einer zweiten Variante wird wiederum ein passiver Kontaktkopf eingesetzt, zwischen den Kontaktkopf und den Rechner aber ein Zusatzgerät geschaltet, das dem Rechner gegenüber auch nach jeder Neukontaktierung eines Chipkartenelements 2 stets den gleichen Kommunikationspartner simuliert. Dadurch läßt sich der Overhead des USB-Protokolls reduzieren und somit eine kürzere Ladezeit für die Daten und den Programmcode erreichen.

In einer dritten Variante wird ein aktiver Kontaktkopf eingesetzt, der einen Mikrochip aufweist. Der aktive Kontaktkopf implementiert Teile aus einer niedrigen Schicht des USB-Protokolls, so daß kein Overhead erforderlich ist und sehr kurze Ladezeiten erreicht werden.

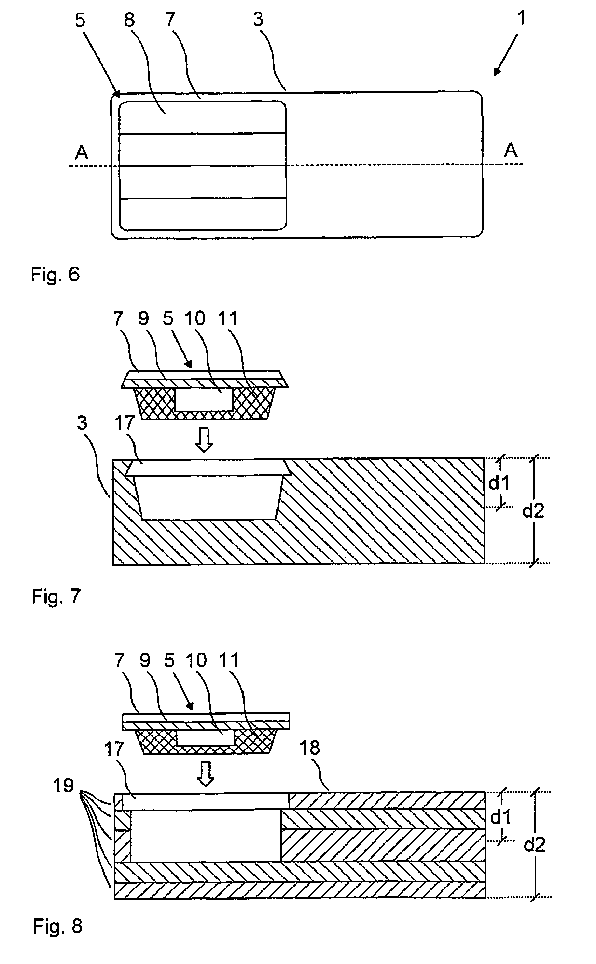

Fig. 6 zeigt ein nur zur allgemeinen Erläuterung des technischen Umfeldes ein nicht erfindungsgemäßes Ausführungsbeispiel für den tragbaren Datenträger 1 in einer schematisierten Aufsicht. Im Unterschied zum ersten Ausführungsbeispiel ist das Chipmodul 5 beim zweiten Ausführungsbeispiel nicht in ein Chipkartenelement 2 sondern direkt in den Träger 3 eingebettet. Infolgedessen entfallen beim Träger 3 der Rand 12 und die Zapfen 13, die beim ersten Ausführungsbeispiel der Fixierung des Chipkartenelements 2 dienen. Somit weist das zweite Ausführungsbeispiel des tragbaren Datenträgers 1 einen entsprechend dem beim ersten Ausführungsbeispiel vorgesehenen Chipkartenelement 2 geformten Träger 3 auf, der sich allerdings bezüglich seiner Dicke von der Dicke d1 des Chipkartenelements 2 unterscheidet.

Dieser Dickenunterschied geht aus Fig. 7 hervor. Das Chipmodul 5 ist so ausgebildet, daß es gut handhabbar ist.

Fig. 7 zeigt eine Momentaufnahme während der Herstellung des Ausführungsbeispiels des tragbaren Datenträgers 1 nach Fig. 6 in einer Fig. 4 entsprechenden Darstellung. Außer im Bereich einer zweistufigen Aussparung 17, die für eine Aufnahme des Chipmoduls 5 vorgesehen ist, weist der Träger 3 gleichförmig die Dicke d2 des tragbaren Datenträgers 1 auf. Die Aussparung 17 erweitert sich bereichsweise konisch zum Inneren des Trägers 3, so daß ein Hinterschnitt ausgebildet wird. In entsprechender Weise ist das Chipmodul 5 bereichsweise konisch ausgebildet. In der Darstellung der Fig. 7 ist das Chipmodul 5 nahe der Aussparung 17 des Trägers 3 angeordnet und wird zur Herstellung des tragbaren Datenträgers 1 maschinell beim Hersteller oder manuell durch den Benutzer des tragbaren Datenträgers 1 in die Aussparung 17 gepreßt. Infolge der aufeinander abgestimmten Formgebung des Chipmoduls 5 und der Aussparung 17 kommt es dabei zu einer formschlüssigen Fixierung des Chipmoduls 5 in der Aussparung 17 des Trägers 3. Bei einer maschinellen Fertigung kann die Verbindung zwischen dem Chipmodul 5 und dem Träger 3 beispielsweise auch durch Verkleben oder Verschweißen hergestellt werden.

Das Chipmodul 5 wird auch im zweiten Ausführungsbeispiel des tragbaren Datenträgers 1 mittels der bei Chipmodulen 5 für Chipkarten bekannten Technologie hergestellt. Da das Chipmodul 5 nicht in den Kartenkörper 4 des Chipkartenelements 2, sondern direkt in den Träger 3 eingebaut wird, ist die Dicke des Chipmoduls 5 allerdings nicht auf den Wert von ca. 0,6 mm begrenzt, der beim Einbau in den Kartenkörper 4 maximal zulässig ist. Zur Erleichterung der Handhabung kann eine Vielzahl von Chipmodulen 5 in einem Band aneinandergereiht sein.

Das Laden von Programmcode und Daten in den integrierten Schaltkreis 10 des Chipmoduls 5 erfolgt im zweiten Ausführungsbeispiel des tragbaren Datenträgers 1 bevorzugt vor dem Einbau des Chipmoduls 5 in den Träger 3. Dabei kann in analoger Weise vorgegangen werden wie beim ersten Ausführungsbeispiel des tragbaren Datenträgers 1 für das Chipkartenelement 2 beschrieben. Auch im Bezug auf die sonstige Bearbeitung inklusive dem Versand zum Benutzer wird die für das Chipkartenelement 2 beschriebene Vorgehensweise in analoger Weise angewandt.

Fig. 8 zeigt nur zur allgemeinen Erläuterung des technischen Umfeldes eine Momentaufnahme während der Herstellung eines weiteren nicht erfindungsgemäßen Ausführungsbeispiels des tragbaren Datenträgers 1 in einer Fig. 4 entsprechenden Darstellung. Dieses Ausführungsbeispiel des tragbaren Datenträgers 1 stimmt in seinem äußeren Erscheinungsbild mit dem in Fig. 6 dargestellten Ausführungsbeispiel überein, unterscheidet sich aber im Hinblick auf seinen Aufbau und das eingesetzte Fertigungsverfahren. Das Fertigungsverfahren zeichnet sich dadurch aus, daß der tragbare Datenträger 1 insgesamt in Chipkartentechnologie hergestellt wird, in seinen Abmessungen allerdings von den Vorgaben der Norm ISO 7810 abweicht. Die Darstellung der Fig. 8 bezieht sich auf einen Fertigungsschritt, bei dem ein Chipmodul 5 in einen kartenähnlichen Aufnahmekörper 18 eingebaut wird. Das Chipmodul 5 kann bezüglich seiner Abmessungen für eine Chipkarte gemäß der Norm ISO 7810 ausgebildet sein oder eine größere Dicke aufweisen. In jedem Fall weist das Chipmodul 5 ein USB-kompatibles Kontaktfeld 7 auf. Der Aufnahmekörper 18 ist aus einem Stapel von Kunststofffolien 19 hergestellt, die durch Lamination fest miteinander verbunden sind. Verglichen mit der Herstellung von Chipkarten gemäß der Norm ISO 7810 enthält der Folienstapel wenigstens eine dickere Kunststofffolie 19 und/oder wenigstens eine zusätzliche Kunststofffolie 19.

An einer für den Einbau des Chipmoduls 5 vorgesehenen Stelle weist der Aufnahmekörper 18 die Aussparung 17 auf. Nach dem Einsetzen des Chipmoduls 5 in die Aussparung 17 wird dieses mit dem Aufnahmekörper 18 verklebt oder verschweißt. Ein manuelles Einsetzen durch den Benutzer des tragbaren Datenträgers 1 ist dabei nicht vorgesehen. Somit ist es prinzipiell möglich, den integrierten Schaltkreis 10 nach dem Einbau des Chipmoduls 5 in den Aufnahmekörper 18 mit Daten und Programmcode zu laden. Angesichts der vergleichsweise aufwendigen maschinellen Handhabung des tragbaren Datenträgers 1 wird der Ladevorgang allerdings bevorzugt mit dem Chipmodul 5 durchgeführt, das zur leichteren Handhabung wiederum in ein Band eingebunden sein kann. Beim Laden wird in analoger Weise vorgegangen, wie für das erste und zweite Ausführungsbeispiel des tragbaren Datenträgers 1 beschrieben.

Das grundlegende Konzept, eine preiswerte Herstellung von Token zu ermöglichen, indem das Token unter maßgeblicher Verwendung eines Elementes aufgebaut wird, das in Chipkartentechnologie gefertigt wird, gestattet weitere, nicht näher erläuterte Abwandlungen, die gleichwohl im Rahmen der erfindungsgemäßen Lösung liegen. Beispielsweise kann ein Chipkartenmodul 2 ohne weitere mehr als nur einen integrierten Schaltkreis aufweisen. Die mehreren Schaltkreise können weiter insbesondere galvanisch miteinender verbunden sein. Selbstverständlich ist die beschriebene Lösung desweiteren nicht auf USB-Token beschränkt. Vielmehr bietet sie sich stets an, wenn eine üblicherweise im Chipkartenbereich genutzte Schnittstelle auf einem tragbarer Datenträger eingesetzt werden soll, der keine Normmaße aufweist.

**Bezugszeichenliste**

| | |
|---|---|
| 1 | tragbarer Datenträger |
| 2 | Chipkartenelement |
| 3 | Träger |
| 4 | Kartenkörper |
| 5 | Chipmodul |
| 6 | Durchgangsbohrung |
| 7 | Kontaktfeld |
| 8 | Kontaktfläche |
| 9 | Substrat |
| 10 | integrierter Schaltkreis |
| 11 | Vergussblock |
| 12 | Rand |
| 13 | Zapfen |
| 14 | Normkarte |
| 15 | Stanzung |
| 16 | Steg |
| 17 | Aussparung |
| 18 | Aufnahmekörper |
| 19 | Kunststofffolie |
| 20 | Vertiefung |

## Patentansprüche

1. Verfahren zur Herstellung eines tragbaren Datenträgers (1) mit einem integrierten Schaltkreis (10) und einem galvanisch mit dem integrierten Schaltkreis (10) verbundenen Kontaktfeld (7), wobei der tragbare Datenträger (1) im Bereich des Kontaktfeldes (7) so geformt und das Kontaktfeld (7) so ausgeführt wird, daß eine direkte Kontaktierung des Kontaktfeldes (7) durch ein gemäß dem USB-Standard ausgebildetes Kontaktierelement möglich ist, mit den Schritten:
Bereitstellen eines in einer Fertigungsanlage für Chipkarten hergestellten Chipkartenelementes (2) mit einem flachstückartigen Kartenkörper (4), das dünner ausgebildet ist als der tragbare Datenträger (1), insbesondere mit einer durch die Norm ISO 7810 vorgegebenen Dicke, und das einen integrierten Schaltkreis (10) und ein galvanisch mit dem integrierten Schaltkreis (10) verbundenes Kontaktfeld (7) aufweist,
Bereitstellen eines Trägers (3), der eine Hauptfläche aufweist, auf der das Chipkartenelement (2) angeordnet und mit dem Träger (3) fest verbunden wird,
Laden von für den Betrieb des tragbaren Datenträgers (1) benötigten Daten und/ oder Programmcode in den integrierten Schaltkreis (10),
**dadurch gekennzeichnet, daß**
der Träger (3) in einem Teilbereich, in dem nach dem Zusammenfügen mit dem Chipkartenelement (2) das Kontaktfeld (7) liegt, deckungsgleich mit dem Chipkartenelement (2) und in einem anderen Teilbereich, der nach dem Zusammenfügen mit dem Chipkartenelement (2) außerhalb des Kontaktfeldes (7) liegt, über das Chipkartenelement (2) überstehend ausgebildet wird, wobei der Träger (3) in dem überstehenden Teilbereich einen erhöhten Rand (12) aufweist, der das Chipkartenelement (2) an drei Seiten umgibt, so daß ein umrahmter Bereich entsteht, der die Positionierung des Chipkartenelementes (2) auf dem Träger (3) erleichtert,
wobei das Chipkartenelement (2) so auf der Hauptfläche angeordnet wird, daß das Kontaktfeld (7) über dem deckungsgleich ausgebildeten Teilbereich des Trägers (3) und ein von dem Kontaktfeld (7) abgewandter Teil des Chipkartenelementes (2) in dem umrahmten Bereich liegt,
und die feste Verbindung zwischen Träger (3) und Chipkartenelement (2) dauerhaft mechanisch durch Kraft- oder Formschluß erfolgt.

2. Verfahren nach Anspruch 1, **dadurch gekennzeichnet, daß** erhöhte Rand (12) bündig mit der Oberfläche des Chipkartenelementes (2) abschließt.

3. Verfahren nach Anspruch 1, **dadurch gekennzeichnet, daß** in den Kartenkörper (4) ein Chipmodul (5) eingebettet wird, das den integrierten Schaltkreis (10) und das Kontaktfeld (7) aufweist.

4. Verfahren nach einem der vorhergehenden Ansprüche, **dadurch gekennzeichnet, daß** das Chipkartenelement (2) vor der Ausbildung der Verbindung mit dem Träger (3) wenigstens zeitweise in eine Karte (14) mit einer größeren Hauptfläche als das Chipkartenelement (2), insbesondere mit einer Hauptfläche gemäß der Norm ISO 7810, eingebunden ist.

5. Verfahren nach einem der vorhergehenden Ansprüche, **dadurch gekennzeichnet, daß** das Laden der Daten und/ oder des Programmcodes in den integrierten Schaltkreis (10) mit Hilfe des USB-Protokolls durchgeführt wird.

6. Verfahren nach einem der vorhergehenden Ansprüche, **dadurch gekennzeichnet, daß** der integrierte Schaltkreis (10) bereits vor der Komplettierung seines Betriebssystems in der Lage ist, eine Datenübertragung gemäß dem USB-Protokoll abzuwickeln.

7. Verfahren nach einem der vorhergehenden Ansprüche, **dadurch gekennzeichnet, daß** der Träger (3) eine größere Hauptfläche als das Chikartenelement aufweist.

8. Verfahren nach einem der vorhergehenden Ansprüche, **dadurch gekennzeichnet, daß** der Träger (3) als ein Spritzgussteil ausgebildet ist.

9. Verfahren nach einem der vorhergehenden Ansprüche, **dadurch gekennzeichnet, daß** das Element stoffschlüssig mit dem Träger (3) verbunden wird.

10. Verfahren nach Anspruch 1, **dadurch gekennzeichnet, daß** das Chipkartenelement (2) und der Träger (3) vom Benutzer des tragbaren Datenträgers (1) manuell zusammengefügt werden.

11. Tragbarer Datenträger mit einem Träger (3) und einem Chipkartenelement (2) mit einem flachstückartigen Kartenkörper (4), einem integrierten Schaltkreis (10) und einem galvanisch mit dem integrierten Schaltkreis (10) verbundenen Kontaktfeld (7), wobei der Träger (3) eine Hauptfläche aufweist, auf der das Chipkartenelement (2) angeordnet und wobei der Träger (3) fest mit dem Chipkartenelement verbunden ist,
wobei der tragbare Datenträger (1) im Bereich des Kontaktfeldes (7) so geformt ist und das Kontaktfeld (7) so ausgeführt ist, daß eine direkte Kontaktierung des Kontaktfeldes (7) durch ein gemäß dem USB-Standard ausgebildetes Kontaktierelement möglich ist,
**dadurch gekennzeichnet, daß**
der Träger (3) als Spritzgußteil gefertigt ist und er in einem Teilbereich, in dem nach dem Zusammenfügen mit dem Chipkartenelement (2) das Kontaktfeld (7) liegt, deckungsgleich mit dem Chipkartenelement (2) und in einem anderen Teilbereich, der nach dem Zusammenfügen mit dem Chipkartenelement (2) außerhalb des Kontaktfeldes (7) liegt,über das Element (2) überstehend ausgebildet ist, wobei der Träger (3) in dem überstehenden Teilbereich einen erhöhten Rand (12) aufweist, der das Chipkartenelement (2) an drei Seiten umgibt, so daß ein umrahmter Bereich entsfeht,
und wobei das Chipkartenelement (2) in so auf der Hauptfläche angeordnet ist, daß ein von dem Kontaktfeld (7) abgewandter Bereich des Chipkartenelementes (2) in dem umrahmten Bereich und das Kontaktfeld (7) über dem deckungsgleich ausgebildeten Teilbereich des Trägers (3) liegt,
und das Chipkartenelement (2) durch kraft- oder formschlüssige Verbindung dauerhaft mechanisch fest mit dem Träger (3) verbunden ist.

## Claims

1. A method for producing a portable data carrier (1) having an integrated circuit (10) and a contact field (7) galvanically connected with the integrated circuit (10), wherein the portable data carrier (1) is so formed in the area of the contact field (7) and the contact field (7) is so executed that a direct contacting of the contact field (7) is possible by a contacting element configured according to the USB standard, with the steps of:
making available a chip card element (2) produced in a production machine for chip cards, said chip card element having a card body (4) in the shape of a flat piece that is configured to be thinner than the portable data carrier (1), in particular with a thickness predetermined by the standard ISO 7810, and having an integrated circuit (10) and a contact field (7) galvanically connected with the integrated circuit (10),
making available a carrier (3) having a main face on which the chip card element (2) is arranged and firmly connected with the carrier (3),
loading the data and/ or program code required for operating the portable data carrier (1) in the integrated circuit (10),
**characterized in that**
the carrier (3) is configured so as to be congruent with the chip card element (2) in a partial area in which there lies the contact field (7) after joining with the chip card element (2), and configured so as to protrude over the chip card element (2) in a different partial area that lies outside the contact field (7) after joining with the chip card element (2), wherein the carrier (3) has an elevated edge (12) in the protruding partial area, with the elevated edge surrounding the chip card element (2) on three sides, so that there arises a framed area that facilitates the positioning of the chip card element (2) on the carrier (3),
wherein the chip card element (2) is so arranged on the main face that the contact field (7) lies above the congruently configured partial area of the carrier (3) and a part of the chip card element (2) facing away from the contact field (7) lies in the framed area,
and the firm connection between the carrier (3) and the chip card element (2) takes place permanently mechanically by force closure or form closure.

2. The method according to claim 1, **characterized in that** the elevated edge (12) is flush with the surface of the chip card element (2).

3. The method according to claim 1, **characterized in that** in the card body (4) there is embedded a chip module (5) having the integrated circuit (10) and the contact field (7).

4. The method according to any of the preceding claims, **characterized in that** before the forming of the connection with the carrier (3) the chip card element (2) is at least temporarily integrated in a card (14) with a larger main face than the chip card element (2), in particular with a main face in accordance with the standard ISO 7810.

5. The method according to any of the preceding claims, **characterized in that** the loading of the data and/or of the program code in the integrated circuit (10) is carried out with the aid of the USB protocol.

6. The method according to any of the preceding claims, **characterized in that** the integrated circuit (10) is able to carry out a data transmission in accordance with the USB protocol already before the completion of its operating system.

7. The method according to any of the preceding claims, **characterized in that** the carrier (3) has a larger main face than the chip card element.

8. The method according to any of the preceding claims, **characterized in that** the carrier (3) is configured as an injection-molded part.

9. The method according to any of the preceding claims, **characterized in that** the element is connected with the carrier (3) in a material-locking fashion.

10. The method according to claim 1, **characterized in that** the chip card element (2) and the carrier (3) are manually joined by the user of the portable data carrier (1).

11. A portable data carrier with a carrier (3) and a chip card element (2) with a card body (4) in the shape of a flat piece, an integrated circuit (10) and a contact field (7) galvanically connected with the integrated circuit (10), wherein the carrier (3) has a main face on which the chip card element (2) is arranged and wherein the carrier (3) is firmly connected with the chip card element,
wherein the portable data carrier (1) is so formed in the area of the contact field (7) and the contact field (7) is so executed that a direct contacting of the contact field (7) by a contacting element configured in accordance with the USB standard is possible,
**characterized in that**
the carrier (3) is manufactured as an injection-molded part and it is configured so as to be congruent with the chip card element (2) in a partial area in which there lies the contact field (7) after joining with the chip card element (2), and configured so as to protrude over the chip card element (2) in a different partial area that lies outside the contact field (7) after joining with the chip card element (2), wherein the carrier (3) has an elevated edge (12) in the protruding partial area, with the elevated edge surrounding the chip card element (2) on three sides, so that there arises a framed area,
and wherein the wherein the chip card element (2) is so arranged on the main face that a area of the chip card element (2) facing away from the contact field (7) lies in the framed area and the contact field (7) lies above the congruently configured partial area of the carrier (3) area,
and the chip card element (2) is permanently mechanically connected with the carrier (3) by force-fitting or form-fitting connection.

## Revendications

1. Procédé de fabrication d'un support de données (1) portable comprenant un circuit intégré (10) et un champ de contact (7) relié de façon galvanique au circuit intégré (10), le support de données (1) portable étant profilé de telle façon dans la zone du champ de contact (7) et le champ de contact (7) étant réalisée de telle façon qu'une mise en contact directe du champ de contact (7) par l'intermédiaire d'un élément de mise en contact réalisé selon le standard USB est possible, comprenant les étapes:
mise à disposition d'un élément de carte à puce (2) fabriqué dans une installation de fabrication de cartes à puce et comprenant un corps de carte (4) laminaire qui est réalisé de façon plus mince que le support de données (1) portable, notamment présentant une épaisseur prescrite par la norme ISO 7810 et qui comporte un circuit intégré (10) et un champ de contact (7) relié de façon galvanique au circuit intégré (10),
mise à disposition d'un support (3) qui comporte une face principale sur laquelle l'élément de carte à puce (2) est agencé et joint à demeure avec le support (3),
chargement, dans le circuit intégré (10), de données et/ou code de programme nécessaires à l'exploitation du support de données (1) portable, **caractérisé en ce que**
le support (3) est réalisé de telle façon que, dans une zone partielle dans laquelle se trouve le champ de contact (7) après la jonction avec l'élément de carte à puce (2), il coïncide avec l'élément de carte à puce (2), et, dans une autre zone partielle qui se trouve à l'extérieur du champ de contact (7) après la jonction avec l'élément de carte à puce (2), il dépasse de l'élément de carte à puce (2), le support (3) présentant, dans la zone partielle qui dépasse, un bord surélevé (12) qui entoure l'élément de carte à puce (2) par trois côtés, de telle sorte qu'il est engendré une zone encadrée qui facilite le positionnement de l'élément de carte à puce (2) sur le support (3),
l'élément de carte à puce (2) étant agencé de telle manière sur la face principale que le champ de contact (7) se trouve au-dessus de la zone partielle du support (3) réalisée de manière coïncidante et qu'une partie de l'élément de carte à puce (2) tournée à l'opposé du champ de contact (7) se trouve dans la zone encadrée,
et **en ce que** la jonction à demeure entre support (3) et élément de carte à puce (2) a lieu mécaniquement en continu par complémentarité de forces ou de formes.

2. Procédé selon la revendication 1, **caractérisé en ce que** le bord surélevé (12) affleure la surface de l'élément de carte à puce (2).

3. Procédé selon la revendication 1, **caractérisé en ce que**, dans le corps de carte (4), un module puce (5) qui comporte le circuit intégré (10) et le champ de contact (7) est encastré.

4. Procédé selon une des revendications précédentes, **caractérisé en ce que**, avant la réalisation de la jonction avec le support (3), l'élément de carte à puce (2) est intégré au moins partiellement dans une carte (14) présentant une face principale plus grande que l'élément de carte à puce (2), notamment présentant une face principale suivant la norme ISO 7810.

5. Procédé selon une des revendications précédentes, **caractérisé en ce que** le chargement des données et/ou du code de programme dans le circuit intégré (10) est exécuté à l'aide du protocole USB.

6. Procédé selon une des revendications précédentes, **caractérisé en ce que** le circuit intégré (10) est, déjà avant la complétion de son système d'exploitation, en mesure d'effectuer une transmission de données selon le protocole USB.

7. Procédé selon une des revendications précédentes, **caractérisé en ce que** le support (3) présente une face principale plus grande que l'élément de carte à puce.

8. Procédé selon une des revendications précédentes, **caractérisé en ce que** le support (3) est réalisé en tant qu'une pièce moulée par injection.

9. Procédé selon une des revendications précédentes, **caractérisé en ce que** l'élément est joint au support (3) par complémentarité de matières.

10. Procédé selon la revendication 1, **caractérisé en ce que** l'élément de carte à puce (2) et le support (3) sont assemblés manuellement par l'utilisateur du support de données (1) portable.

11. Support de données portable comportant un support (3) et un élément de carte à puce (2) comprenant un corps de carte (4) laminaire, un circuit intégré (10) et un champ de contact (7) relié de façon galvanique au circuit intégré (10), le support (3) présentant une face principale sur laquelle l'élément de carte à puce (2) est agencé et le support (3) étant joint à demeure avec l'élément de carte à puce,
le support de données (1) portable étant profilé de telle façon dans la zone du champ de contact (7) et le champ de contact (7) étant réalisé de telle façon qu'une mise en contact directe du champ de contact (7) par l'intermédiaire d'un élément de mise en contact réalisé selon le standard USB est possible,
**caractérisé en ce que** le support (3) est fabriqué en tant qu'une pièce moulée par injection et que, dans une zone partielle dans laquelle se trouve le champ de contact (7) après la jonction avec l'élément de carte à puce (2), il est réalisé sous forme coïncidant avec l'élément de carte à puce (2), et, dans une autre zone partielle qui se trouve à l'extérieur du champ de contact (7) après la jonction avec l'élément de carte à puce (2), il est réalisé sous forme dépassant de l'élément (2), le support (3) présentant, dans la zone partielle qui dépasse, un bord surélevé (12) qui entoure l'élément de carte à puce (2) par trois côtés, de telle sorte qu'une zone encadrée est engendrée,
et l'élément de carte à puce (2) étant agencé de telle manière sur la face principale qu'une zone de l'élément de carte à puce (2) tournée à l'opposé du champ de contact (7) se trouve dans la zone encadrée et que le champ de contact (7) se trouve au-dessus de la zone partielle du support (3) réalisée de manière coïncidante,
et l'élément de carte à puce (2) étant joint mécaniquement en continu avec le support (3) par liaison par complémentarité de forces ou de formes.
